(19) Europäisches Patentamt
European Patent Office
Office européen des brevets

(11) **EP 1 791 991 B1**

(12) **EUROPEAN PATENT SPECIFICATION**

(45) Date of publication and mention
of the grant of the patent:
**18.02.2009 Bulletin 2009/08**

(51) Int Cl.:
*D01F 9/12* (2006.01)    *D01F 9/127* (2006.01)
*C01B 31/02* (2006.01)

(21) Application number: **05785830.0**

(22) Date of filing: **15.09.2005**

(86) International application number:
**PCT/JP2005/017430**

(87) International publication number:
**WO 2006/030963 (23.03.2006 Gazette 2006/12)**

(54) **PROCESS FOR THE PRODUCTION OF VAPOR-GROWN CARBON FIBERS**

HERSTELLUNGSVERFAHREN FÜR IN DER GASPHASE GEWACHSENE KOHLENSTOFFFASERN

PROCEDE POUR LA FABRICATION DE FIBRES DE CARBONE PRODUITES EN PHASE VAPEUR

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.09.2004 JP 2004268697**

(43) Date of publication of application:
**06.06.2007 Bulletin 2007/23**

(73) Proprietor: **Showa Denko K.K.**
**Tokyo 105-8518 (JP)**

(72) Inventors:
• **HIGASHI, Tomoyoshi,**
**c/o SHOWA DENKO K.K.**
**Kawasaki-shi,**
**Kanagawa 2100867 (JP)**
• **KAMBARA, Eiji,**
**c/o SHOWA DENKI K.K.**
**Kawasaki-shi,**
**Kanagawa 2100867 (JP)**

• **TSUJI, Katsuyuki,**
**c/o SHOWA DENKO K.K.**
**Kawasaki-shi,**
**Kanagawa 2100867 (JP)**
• **AOKI, Takanori,**
**c/o SHOWA DENKI K.K.**
**Kawasaki-shi,**
**Kanagawa 2100867 (JP)**

(74) Representative: **Strehl Schübel-Hopf & Partner**
**Maximilianstrasse 54**
**80538 München (DE)**

(56) References cited:
**WO-A-03/097910        US-A- 2 796 331**
**US-A- 4 770 867        US-A- 5 374 415**
**US-A- 5 846 509**

• **BENISSAD-AISSANI F ET AL: "INFLUENCE DES CONDITIONS OPERATOIRES SUR LA CROISSANCE CATALYTIQUE DES FIBRES DE CARBONE VAPODEPOSEES A PARTIR DU METHANE" CARBON, ELSEVIER, OXFORD, GB, vol. 31, no. 1, January 1993 (1993-01), pages 21-27, XP000343956 ISSN: 0008-6223**

**Description**

TECHNICAL FIELD

The present invention relates to a process for efficiently producing a vapor-grown carbon fiber such as a carbon nanotube.

RELATED ART

The carbon fiber obtained by the vapor-growth process (vapor-grown carbon fiber) can have a large aspect ratio with relative ease. Accordingly, studies thereon have been aggressively done heretofore and there is a large number of reports on the production process. A carbon nanotube (that is, a carbon fiber having a fiber diameter on the nanometer order) has attracted particular attention in recent years and can be synthesized by applying this vapor-growth process.

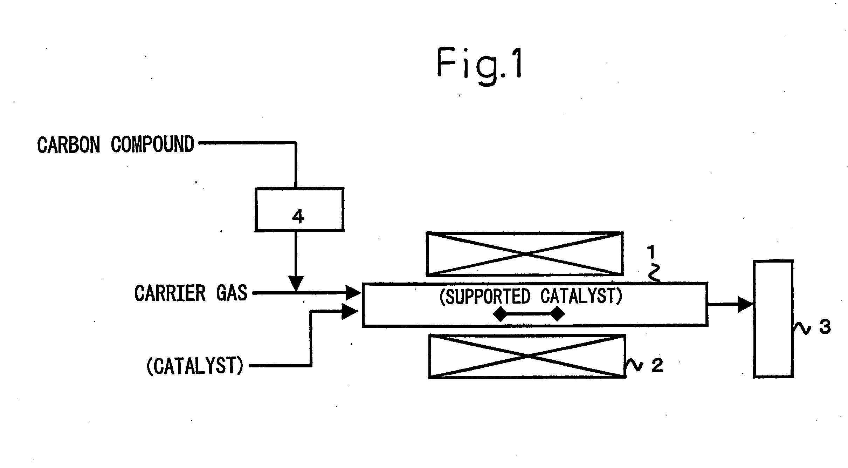

Fig. 1 is a schematic view showing one example of a reaction apparatus for continuously producing a carbon fiber by the vapor-growth process. In one example of the general production process, CO, methane, acetylene, ethylene, benzene, toluene or the like is used as the carbon source which is the raw material of the carbon fiber. A carbon source which is a gas at an ordinary temperature and pressure is supplied, in the gaseous state, by being mixed with a carrier gas. In the case of a liquid, the carbon source is vaporized in a vaporizer 4 and then supplied by being mixed with a carrier gas, or is sprayed in the liquid state into the heating zone 1. The carrier gas used is, for example, nitrogen gas, which is an inert gas, or hydrogen which is reducing gas. In some cases, the carbon source is supplied into a depressurized apparatus. As for a catalyst, a supported catalyst in which a metal is supported on a support such as alumina, or an organic metal compound such as ferrocene, is used. In the case of using a supported catalyst, the supported catalyst is subjected to a necessary pretreatment by previously locating and heating it in a heating zone 1, and then a carbon source is supplied and reacted (this is the example shown in Fig. 1). Alternatively, the reaction is performed by continuously or pulsedly supplying a supported catalyst which has been pretreated, from outside of the system. It is also possible that an organic metal compound readily dissolvable in a carbon source, such as ferrocene, is employed as a catalyst precursor and continuously or pulsedly fed to the heating zone together with a carbon source, and thereby a carbon fiber is produced by utilizing metal particles generated by thermal decomposition of the catalyst precursor as catalyst. The product is collected in the inside of the heating zone 1 heated by a heater 2 or in a collector 3 at the end of the heating zone and, after the completion of reaction, after a predetermined time, recovered.

The production process of a carbon fiber by a vapor-phase method is roughly classified into the following three types according to the method of supplying a catalyst or a precursor compound of the catalyst:

(1) a substrate or boat comprising an alumina or graphite supporting a catalyst or a precursor compound thereof is placed in a heating zone and contacted with a gas of a carbon source supplied in a vapor phase;
(2) a particulate catalyst or a precursor compound thereof is dispersed in a liquid-state carbon source or the like, continuously or pulsedly supplied to a heaving zone from outside of the system, and contacted with a carbon source at a high temperature; and
(3) a metallocene, carbonyl compound and like dissolvable in a liquid-state carbon source is used as the catalyst precursor compound, and a carbon source comprising this catalyst precursor compound dissolved therein is supplied to a heating zone, whereby a catalyst and the carbon source, which is a hydrocarbon or the like, are contacted at a high temperature.

The process of (1) comprises steps which must be independently performed, such as a step of coating a catalyst or a precursor thereof on a substrate, a step of, if desired, performing a pretreatment such as reduction, a step of producing a carbon fiber, and a step of taking out the produced carbon fiber after temperature is lowered, and therefore, this process is disadvantageous in that continuous production is difficult and the productivity is low. On the other hand, in the processes of (2) and (3), continuous production is possible and the productivity is high. Accordingly, a process classified into (2) or (3) is generally employed in industry. However, a sufficiently large amount of carbon fibers cannot be obtained unless a catalyst or a precursor compound thereof is used greatly in excess of the amount necessary for the growth of carbon fiber as a product. Thus, the status quo is that an expensive catalyst or catalyst precursor compound is consumed in a large amount and furthermore, a step of removing a by-product due to the excessively added catalyst is provided. The reason why a sufficiently large amount of carbon fibers cannot be obtained is considered to be because the catalyst having high activity is coarsened through aggregation and loses an ability to grow a carbon fiber. This tendency is serious in the case of using a catalyst not supported on a support or the like and, for example, a catalyst produced by supplying a catalyst precursor, such as ferrocene in the gaseous state or in the state of floating in a raw material gas, to the heating zone.

In the case where an inorganic or non-aromatic compound such as CO, ethane, acetylene and ethylene is used as a carbon source, the process of (1) is used in many cases, because such a compound is low in the production rate of a carbon fiber. In this case, the contact time of a catalyst and a carbon source is as long as from a few minutes to tens of minutes and therefore, the productivity is low.

In the case where an aromatic compound such as benzene and toluene is used as a carbon source, continuous production can be performed by the processes of (2) and (3). However, as described above, the effectiveness of a catalyst or a precursor compound thereof is low, and a catalyst or a precursor compound thereof must be excessively supplied, which leads to a high cost.

In the case where methane is used as a raw material of a carbon fiber, as described above, the process of (1) is used in many cases. Also, in the case of a process capable of continuous production, the yield or productivity is low.

For example, J. Phys. Chem. B, 1999, 103, 6484-6492 uses the process of (1) and therefore, continuous production is difficult. Further, in the process, the reaction temperature is low, and the throughput of carbon fibers per the amount of methane used or per catalyst is extremely low.

Japanese Examined Patent Publication (Kokoku) No. 62-49363 discloses a process of using methane as a raw material of a carbon fiber, but since the methane concentration is low and the reaction temperature is also low, the yield is as low of as 0.1%.

Japanese Unexamined Patent Publication (Kokai) No. 1-92423 discloses a process where in the production of a carbon fiber by a vapor phase method, a mixed gas of $H_2$, CO and $CO_2$ is used as a carrier gas. In this Japanese Unexamined Patent Publication (Kokai) No. 1-9.2423, methane is used as a raw material for a carbon fiber, but the main carbon source is benzene, the amount of a catalyst used is large, and the effectiveness of using methane is not described.

US-A-2 796 331, US-A-4 770 867, WO 03/097910, US-A-5 846 509, US-A-5 374 415, and Benissad-Aissani, F. et al.: "influence des conditions operatoires sur la croissance catalytique des fibres de carbone vapodeposees a partir du methane", Carbon, Elsevier, Oxford, GB, vol. 31, no. 1, January 1993 (1993-01), pages 21-27 disclose methods for producing vapour-grown carbon fibers wherein a carbon source is contacted with a catalyst at elevated reaction temperatures of above 1100 °C.

An object of the present invention is to provide a production process for a vapor-grown carbon fiber, which is simple and effective and in which the effectiveness of a catalyst or a catalyst precursor can be remarkably enhanced and in turn, a carbon fiber can be produced at a low cost. Another object of the present invention is to provide a production process for a vapor-grown carbon fiber, in which a carbon fiber having along average fiber length can be obtained.

DISCLOSURE OF THE INVENTION

As a result of intensive investigations to solve the above-descried subjects, the present inventors have found that when methane is used as the main carbon source and is introduced in a high concentration into an atmosphere at a temperature of 1,100°C or more, the reaction time is shortened and an effectiveness of a catalyst or a catalyst precursor is increased. The present invention has been accomplished based on this finding. In other words, according to the process of the present invention, even in the case of using a very small amount of a catalyst, where a fiber cannot be conventionally produced, a carbon fiber can be obtained at a high yield.

That is, the present invention relates to the following (1) to (14).

(1) A process for producing a vapor-grown carbon fiber by contacting a carbon source in the supplied raw material with a catalyst and/or a catalyst precursor compound in a heating zone to produce a carbon fiber in a vapor phase, wherein the main carbon source is methane, the main carbon source meaning a carbon source having the largest number of carbons when the total amount of carbons in each carbon source contained in the supplied raw material is compared, the concentration of methane in the supplied raw material is at or more than 15 mol% to less than 100 mol%, the temperature in the high-temperature part of the heating zone is from 1,100 to 1,500°C, the temperature at the raw material-introducing part of the heating zone is 700°C or less, the carbon source is introduced together with the catalyst and/or catalyst precursor compound from outside into a reaction furnace, the supplied raw material resides in the low temperature part of the heating zone which is at a temperature of 600 to 1,000°C for 0.05 seconds or more before arriving at the high-temperature part of the heating zone and a carrier gas does not contain an oxygen molecule.

(2) The process for producing a vapor-grown carbon fiber as described in any one of (1) to (3) above, wherein the residence time at a temperature of 1,100°C or more in the heating zone is 0.001 second or more.

(3) The process for producing a vapor-grown carbon fiber as described in any one of (1) to (4) above, wherein the total amount of carbon atoms contained in the carbon source other than methane is 60% or less of the amount of carbon atoms contained in methane.

(4) The process for producing a vapor-grown carbon fiber as described in (3) above, wherein the total amount of carbon atoms contained in the carbon source other than methane is 10% or less of the amount of carbon atoms contained in methane.

(5) The process for producing a vapor-grown carbon fiber as described in any one of (1) to (4) above, wherein the ratio of the atomic number of a catalyst element and the number of carbon atoms in the carbon source is

$$(atomic\ number\ of\ a\ catalyst\ element)/$$
$$(number\ of\ carbon\ atoms)\ =\ 0.000005\ to\ 0.0015.$$

(number of carbon atoms) = 0.000005 to 0.0015.

(6) The process for producing a vapor-grown carbon fiber as described in any one of (1) to (5) above, wherein the catalyst precursor compound is introduced into the heating zone after dissolving it in a compound which is in a liquid state at an ordinary temperature and pressure.

(7) The process for producing a vapor-grown carbon fiber as described in any one of (1) to (5) above, wherein the catalyst precursor compound is introduced into the heating zone after dissolving it in a compound which is in a liquid state at an ordinary temperature and pressure, and entirely vaporizing the resulted solution.

(8) The process for producing a vapor-grown carbon fiber as described in any one of (1) to (5) above, wherein the catalyst precursor compound is introduced into the heating zone after dissolving it in a compound which is in a liquid state at an ordinary temperature and pressure, entirely vaporizing the resulted solution, and mixing thus obtained gas with a methane-containing gas.

(9) The process for producing a vapor-grown carbon fiber as described in any one of (6) to (8) above, wherein the compound which is in a liquid state at an ordinary temperature and pressure is a carbon source.

(10) The process for producing a vapor-grown carbon fiber as described in any one of (6) to (8) above, wherein the solubility of the catalyst precursor compound at 25°C in the compound which is in a liquid state at an ordinary temperature and pressure is 10 g or more per 100 g of the compound which is in a liquid state at an ordinar temperature and pressure.

(11) The process for producing a vapor-grown carbon fiber as described in any one of (6) to (8) above, wherein the compound which is in a liquid state at an ordinary temperature and pressure is at least one compound selected from the group consisting of benzene, toluene and tetrahydrofuran.

(12) The process for producing a vapor-grown carbon fiber as described in any one of (1) to (11) above, wherein the catalyst and/or catalyst precursor compound is at least one metal selected from Groups 3, 5, 6, 8, 9 and 10 of the 18 Groups-Type Periodic Table of Elements and/or a compound comprising the at least one metal.

(13) The process for producing a vapor-grown carbon fiber as described in any one of (1) to (12) above, wherein the all or a part of the gas after reaction is circulated and reused.

(14) The process for producing a vapor-grown carbon fiber as described in any one of (1) to (13) above, wherein a carbon fiber having an average fiber diameter of 10 nm or more is produced.

According to the present invention, methane in a high concentration is introduced into an atmosphere at a high temperature of 1,100°C or more, whereby a carbon fiber can be obtained at high productivity with a very small amount of a catalyst.

BRIEF DESCRIPTION OF DRAWINGS

Fig. 1 is a schematic view showing an example of the general horizontal reaction apparatus for producing a vapor-grown carbon fiber.

Fig. 2 is a schematic view showing an example of the vertical reaction apparatus for producing a vapor-grown carbon fiber.

BEST MODE FOR CARRYING OUT THE INVENTION

The mechanism of giving the effects of the present invention is not clearly known, but is considered to be follows from the results of a study by the present inventors as well as from related patents and documents.

In J. Phys. Chem. B, 1999, 103, 6484-6492 using methane as the raw material of a carbon fiber, the carbon fiber is produced at a low temperature of 1,000°C or less, particularly about 900°C, and the productivity is low. Furthermore, the catalyst is previously charged into a reaction furnace, for example, by loading it on a support, and the catalyst heated to a temperature of the reaction furnace and methane similarly heated are reacted to produce a carbon fiber.

If the reaction furnace is heated to the temperature to 1,100°C or more in this process, the catalyst supported on a support may undergo aggregation. Also, in the case of using methane only as the raw material of a carbon fiber, a part of the methane is thermally decomposed to produce an aliphatic hydrocarbon such as ethylene and propylene, or an aromatic compound having an aromatic ring.

A large number of patent documents disclose a technique of producing a carbon fiber at a high temperature of 1,100°C or more by using an aromatic compound. However, in patent documents and non-patent documents, there are none that specifically disclose that a carbon fiber can be produced, and particularly in a large amount, at a high temperature of 1,100°C or more by using an aliphatic hydrocarbon. This infers that a carbon fiber is not successfully produced when an aliphatic hydrocarbon such as ethylene and propylene is contacted with a catalyst at a high temperature of 1,100°C or more.

That is, also in the present invention, it is necessary not to previously charge a catalyst into a reaction furnace and produce a carbon fiber, but to introduce a carbon source at least including methane together with a catalyst and/or a catalyst precursor compound from outside into a heated reaction furnace. By this introduction, methane is contacted with the catalyst at a temperature of 1,000°C or less to produce a carbon fiber during temperature elevation of the raw material mixture prepared at a low temperature, and the thus obtained carbon fiber grows by using methane and a carbon source other than methane at a temperature of 1,000°C or more. In order to obtain a carbon fiber with high productivity, the growth must be accelerated at a temperature of 1,100°C or more.

The production of a carbon fiber from methane starts from a low temperature, in other words, the production of a fiber starts before the catalyst particles are aggregated and coarsened to lose a catalytic ability, whereby the effectiveness of the catalyst or catalyst precursor is remarkably enhanced and the fiber continuously grows in the diameter direction at a high temperature. As a result, even if the methane concentration is high, production of non-fibrous matters is suppressed and high productivity can be achieved.

Furthermore, as the production of a carbon fiber from methane starts from a low temperature, a carbon fiber having a long fiber length can be obtained as compared with the case of using an aromatic compound as a raw material carbon source of a carbon fiber.

The constituent elements of the present invention are described in detail below.

(Carbon Source)

In the production process of a carbon fiber of the present invention, the main carbon source is methane. The "carbon source" means a compound having a carbon atom. Accordingly, when the catalyst precursor compound has a carbon atom, the catalyst precursor compound is also included in the "carbon source". However, carbon monoxide and carbon dioxide show a behavior different from that of an aliphatic hydrocarbon or an aromatic hydrocarbon and therefore, are not included in the "carbon source" as concerns the present invention. The "main carbon source" means a carbon source having a largest number of carbons when the total amount of carbons in each carbon source contained in the supplied raw material is compared.

In the production of a carbon fiber by the process of the present invention, a carbon source other than methane cannot be used as the main carbon source. For example, if an aliphatic hydrocarbon such as ethane, propane and butane is used as the main carbon source, a mixture of a fine carbon fiber and a non-fibrous product is obtained, and the yield of a carbon fiber becomes low, and a large amount of a non-fibrous material is contained. If an aromatic hydrocarbon such as benzene and toluene is used, a carbon fiber cannot be obtained unless a large amount of a catalyst is used.

The methane concentration in the supplied raw material is at or more than 15 mol% to less than 100 mol%, more preferably from 30 to 95 mol%, still more preferably from 45 to 90 mol%. If the methane concentration in the raw material is excessively low, the productivity of a carbon fiber decreases, whereas if the methane concentration is excessively high, a non-fibrous product may be produced. The "supplied raw material" means a composition containing a carbon source, a catalyst and/or catalyst precursor, and a carrier gas described below, i.e. includes all components supplied to the heated zone, as concerns the present invention.

The carbon source other than methane, which is used along with methane, is preferably not used in an excessively large amount, because if used in a large amount, the carbon source inhibits the properties of methane. The carbon source other than methane is used in such an amount that the total amount of carbon atoms contained in such a carbon source is preferably 60% or less, more preferably 40% or less, still more preferably 20% or less, further still more preferably 10% or less, and most preferably 5% or less, based on the total amount of carbon atoms contained in methane. If the carbon source other than methane is used in an excess amount, the amount of a non-fibrous solid matter produced abruptly increases.

(Catalyst)

The catalyst used for the present invention is not particularly limited as long as it is a substance capable of accelerating the growth of a carbon fiber. The catalyst is, for example, at least one metal (particularly, a fine particle thereof) selected from the group consisting of Groups 3 to 12 of the 18 Groups-Type Periodic Table of Elements recommended by IUPAC in 1990, preferably at least one metal selected from the group consisting of Groups 3, 5, 6, 8, 9 and 10, more preferably iron, nickel, cobalt, ruthenium, rhodium, palladium, platinum or a rare earth element.

(Catalyst Precursor Compound)

The "catalyst precursor compound" means a compound which is thermally decomposed upon heating and, in some cases, further reduced to provide the catalyst. The catalyst precursor compound includes an organic metal compound, a metal salt, etc. For example, ferrocene which is a catalyst precursor compound is thermally decomposed upon heating to provide iron fine particles which work as a catalyst. Accordingly, as for the catalyst precursor compound, a compound of providing the above-described metal can be suitably used. More specifically, the catalyst precursor compound is, for example, a metal compound containing at least one element selected from the group consisting of Groups 3 to 12, preferably a compound containing at least one element selected from the group consisting of Groups 3, 5, 6, 8, 9 and 10, and most preferably a compound containing iron, nickel, cobalt, ruthenium, rhodium, palladium, platinum or a rare earth element.

It is also possible to add a metal compound containing at least one element, selected from the group consisting of Groups 1 to 17 as a modification component (so-called co-catalyst), to the main component to modify the catalytic performance of the main component metal.

(Support)

The catalyst and/or catalyst precursor compound may also be used, if desired, by loading it on a support. The support is preferably a compound stable in the heating zone, and examples of such a compound include alumina, silica, zeolite, magnesia, titania, zirconia, graphite, activated carbon and carbon fiber. However, this support compound must be introduced together with a carbon source, etc. into a heated furnace without previously charging it into a reaction furnace.

(Amount of Catalyst, etc.)

The amount of the catalyst or catalyst precursor compound to be used is, in terms of the ratio between the atomic number of an a catalyst element (for example, Fe) and the number of carbon atoms in the carbon source, preferably 0.000005 to 0.0015, more preferably from 0.00001 to 0.001, still more preferably from 0.00002 to 0.0005, and most preferably from 0.00004 to 0.0004. If this ratio is less than 0.000005, the amount of catalyst is too small and the number of fibers may decrease or the fiber diameter may increase, whereas if the ratio exceeds 0.0015, not only the profitability is low but also coarsened catalyst particles, not functioning as a catalyst, may be mixed in the fiber. As for the total number of carbon atoms of the carbon source in the raw material, when the catalyst precursor compound contains a carbon, the carbon atoms thereof are also included. That is, the total number of carbon atoms is a total amount of all carbon atoms excluding carbons contained in the carbon monoxide and carbon dioxide in the supplied raw material.

(Method of Supplying Raw Material)

The method of supplying the raw material is not particularly limited. The methane and/or carbon source other than methane and the catalyst and/or catalyst precursor compound may be vaporized and supplied in the gaseous state, or a part or all thereof may be supplied in the liquid state. In order to efficiently produce a carbon fiber, these raw materials are preferably vaporized before the production of carbon fiber starts, thoroughly mixed as gaseous materials and then supplied. The gaseous materials are preferably thoroughly mixed at 700°C or less, more preferably 600°C or less, and most preferably 400°C or less.

The catalyst and/or catalyst precursor compound is in a solid or a liquid state at an ordinary temperature and pressure in many cases. As the effectiveness of the catalyst is high and the amount to be used may be a small amount, even in the case of a liquid, it is sometimes difficult to supply the catalyst or catalyst precursor, compound as-is to the heating zone. In such a case, the catalyst and/or catalyst precursor compound or the like may be supplied by dissolving or dispersing it in a compound which is a liquid at an ordinary temperature and pressure. As the compound which is a liquid at an ordinary temperature and pressure, a carbon source which is a liquid at an ordinary temperature and pressure may be used. In the case of dissolving the catalyst and/or catalyst precursor compound in a compound which is a liquid at an ordinary temperature and pressure, the solubility is preferably high.

For example, as the compound which is a liquid at an ordinary temperature and pressure, a compound which is a liquid at an ordinary temperature and pressure and in which the solubility of the catalyst precursor compound at 25°C is preferably 1 g or more, more preferably 5 g or more, and still more preferably 10 g or more per 100 g of the compound which is in a liquid state at an ordinary temperature and pressure may be used. In the case of using ferrocene often employed as the catalyst precursor compound, as the compound which is a liquid at an ordinary temperature and pressure, a compound which is a liquid at an ordinary temperature and pressure and in which the solubility of ferrocene at 25°C is 5 g or more per 100 g of the compound which is in a liquid state at an ordinary temperature is preferably used, and specifically benzene, toluene and tetrahydrofuran may be used.

The compound which is a liquid at an ordinary temperature and pressure is preferably a compound having a boiling point of 115 °C or more in which the solubility of the catalyst precursor at 25°C is 1 g or more per 100 g of the compound which is a liquid at an ordinary temperature and pressure. Specifically, the compound includes aromatic compounds such as o-xylene, m-xylene, p-xylene, ethylbenzene, stylene; esters such as methyllactate, methylpyruvate; ketone compounds such as 4-methyl-2-pentanone, 2-hexanone, 3-hexanone, cyclopentanone, hydroxyacetone, 3-heptanone, 4-hepatanone; and ether compounds such as propyleneglycolmonomethylether, propyleneglycolmonoethylether.

The compound which is a liquid at an ordinary temperature and pressure is preferably a compound having a boiling point of 150 °C, or more in which the solubility of the catalyst precursor at 25°C is 1 g or more per 100 g of the compound which is a liquid at an ordinary temperature and pressure. Specifically, the compound includes aromatic compounds such as cumene, anisol, 4-methoxytoluene; ester compounds such as ethyl lactate, 2-ethoxyethyl acetate, propyleneglycolmonoethylether acetate, dimethyl malonate, propyleneglycol diacetate, γ-butylolactone; ketone compounds such as 4-methoxy-4-methyl-2-pentanone, 4-hydroxy-4-methyl-2-pentanone, cyclohexanone, 2,6-dimethyl-4-heptanone, 3-methylcyclohexanone, 3-methoxy-1-butanol, ethyleneglycol monoisobutyl ether, ethyleneglycol monomethyl ether, diethyleneglycol dimethyl ether, propyleneglycol mono-n-buthyl ether, ethyleneglycol mono-n-buthyl ether, 3-methoxy-3-methyl-1-butanol, tetrahydrofurfuryl alcohol, dipropyleneglycol monomethyl ether, diethyleneglycol diethyl ether, diethyleneglycol monomethyl ether, diethyleneglycol monoethyl ether, triethyleneglycol dimethyl ether; and amide compounds such as dimethylformamide.

The method for supplying a compound which is a liquid at an ordinary temperature and pressure and in which the catalyst and/or catalyst precursor compound or the like is dissolved or dispersed is not particularly limited. For example, this compound may be supplied by spraying it in the liquid state with use of a nozzle or the like, but in order to attain thorough mixing with a gas component such as methane at a lower temperature, the compound is preferably introduced after vaporization at a temperature where all components can be thoroughly vaporized, more preferably in the state that the gases are thoroughly mixed before introduction.

(Carrier Gas)

In the production of the vapor-grown carbon fiber of the present invention, it is recommended to use a carrier gas in addition to the above-described composition. As for the carrier gas, hydrogen, nitrogen, helium, argon, krypton or a mixed gas thereof may be used, but a gas containing an oxygen molecule (that is, oxygen in the molecular state ($O_2$)), such as air, is not suited. The catalyst precursor compound for use in the present invention is sometimes in the oxidized state and in such a case, a hydrogen-containing gas is preferably used as the carrier gas. Accordingly, the carrier gas is preferably a gas containing hydrogen at a concentration of 1 vol% or more, more preferably 30 vol% or more, and most preferably 85 vol% or more, and this is, for example, a gas of 100 vol% hydrogen or a gas of hydrogen diluted with nitrogen. The hydrogen gas concentration used here is based only on the carrier gas, but the amounts of methane and/or carbon source other than methane, the gasified catalyst and/or catalyst precursor compound and the like are not considered.

(Sulfur Compound)

In the production of the vapor-grown carbon fiber of the present invention, a sulfur compound considered to be effective in controlling the carbon fiber diameter may be used in combination. The sulfur compound which can be used in the present invention includes sulfur; thiophene; hydrogen sulfide; carbon sulfide; mercaptans such as methyl mercaptan, tert-butyl mercaptan; sulfides such as dimethyl sulfide; and disulfides such as dimethyl disulfide. The preferred sulfur compound includes thiophene, carbon disulfide, dimethyl sulfide and dimethyl disulfide, and more preferred sulfur compound includes dimethyl sulfide and dimethyl disulfide.

A compound such as sulfur, thiophene, hydrogen sulfide, carbon sulfide, mercaptans such as tert-butyl mercaptan, sulfides such as dimethyl sulfide, and disulfides such as dimethyl disulfide may be supplied in the gaseous state or by dissolving it in a solvent. The total molar number of sulfur supplied is suitably 100 times or less, preferably 10 times or less, more preferably 2 times or less, the molar number of a catalyst element. If the amount of sulfur supplied is excessively large, this is not only unprofitable but also it also inhibits the growth of a carbon fiber, and is not preferred.

(Synthesis of Carbon Fiber)

The synthesis of a vapor-grown carbon fiber is achieved by supplying the raw materials described above and, if desired, a carrier gas to a heating zone, and contacting these under heating. The reactor (heating zone) is not particularly limited as long as predetermined residence time and heating temperature are obtained, but a vertical or horizontal tubular furnace is preferred in view of the supply of raw material and the control of residence time.

As methane, which is a stable compound, is used as the carbon source, preferably as the main carbon source, if the temperature in the heating zone is too low, a solid product as well as a carbon fiber is not produced at all or is produced in an extremely small amount, whereas if the temperature is excessively high, a carbon fiber does not grow or only a thick fiber is obtained. Therefore, the temperature in the high-temperature part of the heating zone is from 1,100 to 1,500°C, more preferably from 1,150 to 1,350°C.

The main component of the carbon source in the gas after the reaction is preferably methane. In the case where an oxygen-containing compound is contained in the reaction gas, a part of the carbon becomes carbon monoxide or carbon dioxide but, as described above, these are not included in the carbon source. Accordingly, the gas after reaction satisfies the composition comprising methane and a carbon source other than methane and can be circulated and reused by again supplying all or a part of the gas, as-is or after adding methane and/or a carbon source other than methane, to the heating zone. In the case of circulating and reusing the gas after reaction, the reused gas and the components additionally added in combination form the reaction raw material and therefore, this raw material must satisfy the raw material composition of the present invention.

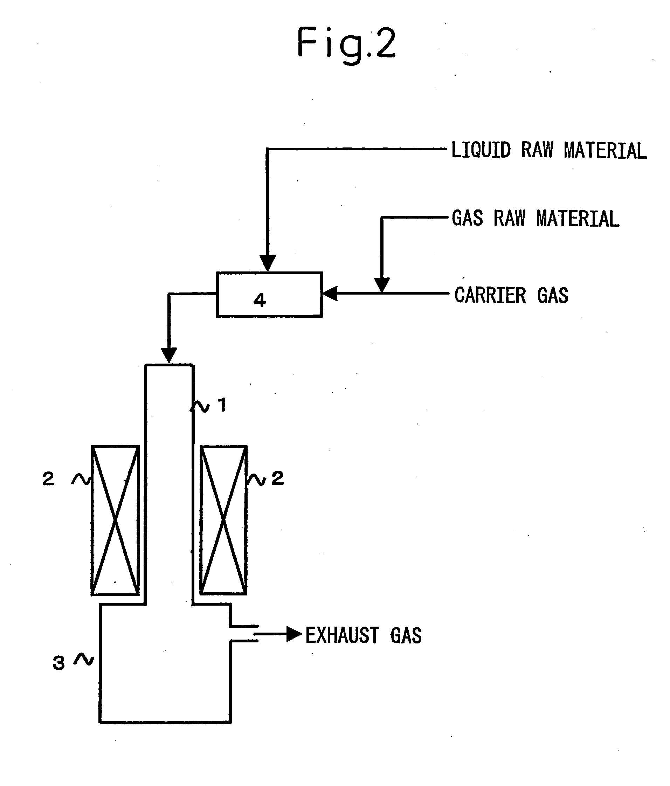

Fig. 2 shows one example of the reaction apparatus. In this case, a quartz-made reaction tube 1 used as a heating zone is equipped with a heater 2 and, at the top, is connected to a supply line of mixing and supplying raw material components such as carrier gas and methane as well as a raw material liquid component containing a catalyst and/or a catalyst precursor compound. In this supply line, a vaporizer 4 is disposed. At the bottom of the reaction tube 1, a receiver 3 for collecting the produced carbon fibers is provided. By using such an apparatus, the heater 2 is set to a predetermined temperature of 1,100°C or more and raw materials are introduced from the introduction line 4 and reacted.

The characteristic feature of the present invention is to efficiently recover the supplied carbon source as carbon fibers. The fundamental mechanism thereof is mainly such that a carbon fiber produced upon contact of methane with a catalyst at a low temperature of 1,000°C, or less is effectively grown in the diameter direction at a high temperature of 1,000°C or more by using a carbon source, for example, methane, an aliphatic hydrocarbon such as ethylene and propylene and/or an aromatic hydrocarbon such as benzene, which all are a decomposition product of methane.

In order to realize the above-described state, the temperature at the raw material-introducing part from which a raw material is induced into the reaction tube, that is, the heating zone, must be kept lower than the temperature in the high-temperature part of the heating zone. The temperature of the raw material-introducing part is 700°C or less, more preferably 600°C or less, still more preferably 400°C or less. The residence at 1,000°C or less must be kept to a certain period of time by introducing the raw material into the low-temperature region. In particular, the residence time at 600 to 1,000°C is important and the raw material is caused to stay in this temperature range for 0.05 seconds or more, preferably 0.5 seconds ore more, still more preferably from 1.0 to 30 seconds. However, this residence time can be arbitrarily determined depending on the desired fiber length, raw material concentration, temperature of the supplied raw material, catalyst concentration or the like.

In such a case, the actual gas temperature is hard to measure. Therefore, the temperature used here is a value obtained, for example, by inserting a platinum-platinum-13% rhodium alloy thermocouple capable of measuring even a temperature of 1,000°C or more into the heating zone. To be precise, this measured value is affected by radiation and does not necessarily agree with the gas temperature but can be satisfactorily used as an index for specifying the preferred condition of the present invention.

The residence time in the temperature range of 600 to 1,000°C is a time of passage of the raw material gas through a region where the temperature measured as above on the inlet side of the reaction apparatus elevates from 600°C to 1,000°C. The residence time is calculated on the assumption that the raw material gas creates a plug flow in this region and the temperature of the raw material gas is elevated to the temperature measured as above. In the case where the temperature at the upstream end of heating zone or the temperature of ejection part of a nozzle or the like inserted into the heating zone as a pipe having an inner diameter smaller than, for example, 1/5 as compared with the heating zone, exceeds 600°C, the residence time is a residence time in the region from the upstream end of heating zone or the ejection part of a nozzle or the like to a part where the temperature is elevated to 1,000°C. In this case, the residence time is calculated on the assumption that the raw material creates a plug flow in this region and the temperature of the raw material gas is elevated to the temperature measured as above.

The residence time at a temperature of 1,100°C or more can be determined in the same manner as the residence time in the temperature range of 600 to 1,000°C, and this residence time is, for example, 0.001 second or more, preferably 0.01 second or more, more preferably from 0.1 to 30 seconds. However, the residence time at a temperature of 1,100°C or more can be arbitrarily determined depending on the desired fiber thickness, raw material concentration, temperature in the high-temperature part, or the like.

As described above, the fundamental mechanism of the present invention is mainly such that a carbon fiber produced at a low temperature of 1,000°C or less is grown in the diameter direction at a high temperature of 1,000°C or more. In order to effectively grow a fiber, a high temperature of 1,100°C or more is particularly used here. Accordingly, the production process of the present invention is particularly suited for the production of a relatively thick fiber rather than the production of a carbon fiber having a very small outer diameter, such as single wall or dual wall carbon fiber. More specifically, the production process of the present invention is optimal as a production process of a carbon fiber having an average outer diameter of 10 nm or more, preferably 50 nm or more, and most preferably 100 nm or more. The outer diameter of a carbon fiber as used herein can be determined, for example, by measuring the outer diameter of the images of about 100 fibers in a photograph from an SEM.

Furthermore, the present invention is characterized in that, despite it being a production process with high productivity, a carbon fiber having a long fiber length can be produced as compared with the case of using a carbon source such as benzene capable of producing a carbon fiber with similarly high productivity. That is, the production process of the present invention is optimal as a production process of a carbon fiber having an average fiber length of 10 $\mu$m or more, preferably 13 $\mu$m or more, and most preferably 15 $\mu$m or more. The length of a carbon fiber as used herein can be determined, for example, by measuring the length of the images of about 100 fibers in a photograph from an SEM similarly to the case of the outer diameter.

According to the present invention, the effectiveness of a catalyst or a catalyst precursor can be remarkably enhanced. That is, a carbon fiber can be efficiently obtained even with a small amount of a catalyst. In a carbon fiber produced by a normal process, a catalyst (e.g., iron) of about 50,000 mass ppm generally remains. Therefore, the carbon fiber produced is subjected to firing (at around 1,500°C) or graphitization treatment (at 2,000 to 3,000°C) in an inert gas so as to enhance the physical properties. A part of iron or the like as the catalyst is vaporized or transpired by this treatment and the catalyst residual amount decreases in the carbon fiber after graphitization treatment. On the other hand, According to the production process of the present invention, the catalyst content in the carbon fiber can be extremely decreased even in the state not subjected to a treatment such as firing and graphitization. For example, a carbon fiber having a catalyst content of 5,000 ppm or less or, under preferred conditions, a catalyst content of 500 ppm or less can be obtained in the state not subjected to a treatment such as firing and graphitization, and depending on usage, the graphitization treatment is not necessary.

In the process of the present invention, the average outer diameter of the fiber obtained tends to change by varying the ratio of the catalyst and/or catalyst precursor compound to methane. That is, the fiber diameter becomes small when the ratio of the catalyst and/or catalyst precursor compound is increased, and becomes large when the ratio is decreased. This reveals that the average outer diameter of the carbon fiber obtained can be controlled merely by changing the composition of a raw material carbon source and a catalyst without changing the reaction apparatus or detailed conditions. For example, a carbon fiber having a fiber outer diameter of 80 to 150 nm can be very easily produced.

\<Examples\>

The present invention is described in greater detail below by referring to Examples, but the present invention is not limited thereto.

The reagents and the like used in Examples and Comparative Examples below are as follows.

\<Reagents\>

1. Carbon Source

| | |
|---|---|
| Methane: | Takachiho Trading' Co., Ltd. |
| Benzene: | Wako Pure Chemical Industries, Ltd. |
| Toluene: | Wako Pure Chemical Industries, Ltd. |
| Tetrahydrofuran: | Wako Pure Chemical Industries, Ltd. |

2. catalyst Precursor Compound

| | |
|---|---|
| Ferrocene: | Nippon Zeon Co., Ltd. |

3. Other Components

| Thiophene: | Wako Pure Chemical Industries, Ltd. |
| Dimethyl sulfide: | Wako Pure Chemical Industries, Ltd. |
| Dimethyl disulfide: | Wako Pure Chemical Industries, Ltd. |
| Carbon disulfide: | Wako Pure Chemical Industries, Ltd. |

<Synthesis of Carbon Fiber>

<Example 1>

A vertical furnace equipped with a heating zone 1 of the quartz-made reaction tube (inner diameter: 31 mm, outer diameter: 36 mm, length of heating zone: about 400 mm) shown in Fig. 2 was used. The temperature of the heating zone 1 was elevated to 1,200°C with an $N_2$ stream, the supply of $N_2$ was then stopped, and $H_2$ as a carrier gas was instead flowed into the heating zone 1 at 1 NL/min. After the temperature was stabilized, benzene, ferrocene and thiophene were dissolved and mixed with each other, and the resulting solution was introduced into a vaporizer 4 heated at 200°C to introduce each component in the amount shown in Table 1, vaporized and then entrained in $H_2$. In this state, a solid product was not produced. Thereafter, the flow rate of $H_2$ was decreased to 0.5 NL/min and methane was mixed with hydrogen at a flow rate of 0.5 NL/min. In this way, all compounds were supplied in the gaseous state into the reaction tube. The unit "NL" as used herein indicates a volume (liter) in the standard state (0°C, 1 atm).

In order to determine the residence time, the temperature was elevated to 1, 200°'C with a He stream at 1 NL/min and when the temperature was stabilized, the inside temperature of the quartz tube was measured by using a platinum-platinum·13% rhodium alloy thermocouple. As a result, the temperature was 600°C at 24 cm from the top of the quartz tube and 1,000°C at 29 cm. The residence time therebetween was determined and found to be 0.59 seconds. The temperature was higher than 1,100°C at 33 cm from the top of the quartz tube and was lower than 1,1000°C at 60 cm. The residence time therebetween was determined and found to be 2.25 seconds.

As a result of reaction, a grayish cobweb-like deposit was produced between the bottom of reaction tube and the collector 3. After the temperature was lowered, the deposit was recovered and the carbon recovery percentage was determined by dividing the amount of the recovered deposite by the amount of carbon initially contained in the carbon source used, and found to be 42%. The conditions and results of the test are shown in Table 1.

The concentration of methane is determined according to the following equations:

```
Concentration of Methane (mol%)
       = (Amount of Methane Supplied (mmol/min))
       / (Amount of Raw materials Supplied (mmol/min))
       × 100
```

```
Amount of Raw materials Supplied (mmol/min))
       = (Amount of Methane Supplied (mmol/min))
       + Amount of Carrier Gas Supplied (mmol/min))
       + Amount of Carbon Sources other than Methane
    Supplied (mmol/min))
       + Amount of Ferrocene Supplied (mmol/min))
       + Amount of Sulfur Compound Supplied (mmol/min))]
```

With regard to the experimental conditions, ratios of a total amount of carbon atom in carbon sources supplied other than methane to a total amount of carbon atom in methane supplied (%) are calculated according to the following equation, and shown in Table 2:

```
    Ratio of Total Amount of Carbon Atom in Carbon
Sources Supplied Other Than Methane to Total Amount of
Carbon Atom in Methane Supplied (%)
    =[Carbon Atom Amount in Carrier Gas (mmol/min)
        + Carbon Atom Amount in Carbon Sources other
than Methane (mmol/min)
        + Carbon Atom Amount in Ferrocene (mmol/min)
        + Carbon Atom Amount in Sulfur Compound
(mmol/min)]
    / [Carbon Atom Amount in Methane (mmol/min)]
```

Also, the cobweb-like product was observed by a scanning electron microscope. Out of the product, the average outer diameter and the average length were examined on about 100 pieces, as a result, the product was found to be a fibrous material having an average outer diameter of 200 nm and an average length of 20 $\mu$m.

<Example 2>

The reaction was performed according to the method of Example 1 except for setting the reaction temperature to 1,250°C and changing the composition of the solution prepared by dissolving and mixing benzene, ferrocene, and thiophene with together. The conditions and results of the test are shown in Tables 1 and 2. The carbon recovery percentage was 53% and the product was a fibrous material having an average outer diameter of 170 nm and an average length of 15 $\mu$m.

<Example 3>

The reaction was performed according to the method of Example 2 except for changing the flow rates of $H_2$ and methane to 0.64 NL/min and 0.36 NL/min, respectively. The conditions and results of the test are shown in Tables 1 and 2. The carbon recovery percentage was 34% and the product was a fibrous material having an average outer diameter of 170 nm.

<Example 4>

The reaction was performed according to the method of Example 2 except for changing the flow rates of $H_2$ and methane to 0.82 NL/min and 0.18 NL/min, respectively. The conditions and results of the test are shown in Tables 1 and 2. The carbon recovery percentage was 15% and the product was a fibrous material having an average outer diameter of 150 nm.

<Example 5>

The reaction was performed according to the method of Example 1 except for changing the flow rates of $H_2$ and methane to 0.25 NL/min and 0.75 NL/min, respectively. The conditions and results of the test are shown in Tables 1 and 2. The carbon recovery percentage was 45% and the product was a fibrous material having an average outer diameter of 250 nm.

<Example 6>

The reaction was performed according to the method of Example 2 except for the flow rate of the solution prepared by dissolving and mixing benzene, ferrocene and thiophene with each other. The conditions and results of the test are shown in Tables 1 and 2. The carbon recovery percentage was 55% and the product was a fibrous material having an average outer diameter of 200 nm.

<Example 7>

The reaction was performed according to the method of Example 6 except for using toluene in place of benzene and setting the introduced amount thereof to 0.10 mmol/min. The conditions and results of the test are shown in Tables 1 and 2. The carbon recovery percentage was 56% and the product was a fibrous material having an average outer diameter of 200 nm.

<Example 8>

The reaction was performed according to the method of Example 6 except for using tetrahydrofuran in place of benzene and setting the introduced amount thereof to 0.13 mmol/min. The conditions and results of the test are shown in Tables 1 and 2. The carbon recovery percentage was 51% and the product was a fibrous material having an average outer diameter of 200 nm.

<Example 9>

The reaction was performed according to the method of Example 2 except for using dimethyl sulfide in place of thiophene. The conditions and results of the test are shown in Tables 1 and 2. The carbon recovery percentage was 55%, and the product was a fibrous material having an average outer diameter of 250 nm and an average length of 32 $\mu$m.

<Example 10>

The reaction was performed according to the method of Example 2 except for using dimethyl disulfide in place of thiophene. The conditions and results of the test are shown in Tables 1 and 2. The carbon recovery percentage was 51%; and the product was a fibrous material having an average outer diameter of 200 nm and an average length of 18 $\mu$m.

<Example 11>

The reaction was performed according to the method of Example 2 except for using hydrogen disulfide in place of thiophene. The conditions and results of the test are shown in Tables 1 and 2. The carbon recovery percentage was 54%, and the product was a fibrous material having an average outer diameter of 250 nm.

<Comparative Example 1>

In a vertical furnace equipped with the quartz-made reaction tube 1 (inner diameter: 31 mm, outer diameter: 36 mm, length of heating zone: about 400 mm) shown in Fig. 2 was used. The temperature of the heating zone was elevated to 1,200°C with an $N_2$ stream, the supply of $N_2$ was then stopped, and $H_2$ as a carrier gas was instead passed into the reaction tube at 1 NL/min. After the temperature was stabilized, benzene, ferrocene and thiophene were dissolved and mixed together, and the resulting solution was introduced into a vaporizer 4 heated at 200°C to introduce each component in the amount shown in Table 1, vaporized and then entrained in $H_2$. In this way, all compounds were supplied in the gaseous state into the reaction tube.
As a result of the reaction, a black powdery deposit was produced between the bottom of reaction tube and the collector. After the temperature was lowered, the deposit was recovered and the carbon recovery percentage was determined by dividing the amount of the recovered deposite by the amount of carbon initially contained in the carbon source used, and found to be 30%. The conditions and results of the test are shown in Tables 1 and 2.
Also, the powdery product was observed by a scanning electron microscope. The solid matter was mostly spherical particles, and almost no fibrous material was obtained with the catalyst amount on the same level as in Examples 1 to 5.

<Comparative Example 2>

The reaction was performed according to the method of Comparative Example 1 except for changing the composition of the solution prepared by dissolving and mixing benzene, ferrocene and thiophene with each other. The conditions and results of the test are shown in Tables 1 and 2. The carbon recovery percentage was 39%, and the product was a fibrous material having an outer diameter of 100 nm and an average length of 7 $\mu$m. Although a fibrous material was obtained by increasing the catalyst amount, the fiber length was short.

<Comparative Example 3>

The reaction was performed according to the method of Example 2 except for changing the flow rates of $H_2$ and methane to 0.91 NL/min and 0.09 NL/min, respectively. The conditions and results of the test are shown in Tables 1 and 2. As a result of the reaction, a solid deposit was not obtained. Namely, the carbon recovery percentage was 0%. This is because the methane concentration was excessively low.

<Comparative Example 4>

The reaction was performed according to the method of Example 2 except for setting the reaction temperature to 1,000°C. The conditions and results of the test are shown in Tables 1 and 2. As a result of reaction, a solid deposit was not obtained. Namely, the carbon recovery percentage was 0%. This is because the reaction temperature was excessively low.

<Comparative Example 5>

The reaction was performed according to the method of Comparative Example 4 except for not passing $H_2$ and changing the flow rate of methane to 1 NL/min. The conditions and results of the test are shown in Tables 1 and 2. As a result of reaction, a brown smoky matter was produced in the gas at the outlet of the reaction furnace and a black sticky material was attached to the inner wall of the reaction tube, but a recoverable solid deposit was not obtained. Namely, the carbon recovery percentage was 0%. When the reaction temperature is excessively low, a carbon fiber is not obtained even if the methane concentration is elevated.

<Table 1>

Table 1: Conditions and Results of Test

| | Temperature in High-Temperature part (°C) | Concentration of Methane (mol%) | Amount of Methane Introduced (mmol/min) | Carbon Source other than Methane | | Amount of Ferrocene Introduced (mmol/min) |
|---|---|---|---|---|---|---|
| | | | | Compound | Amount Introduced (mmol/min) | |
| Example 1 | 1200 | 50 | 22 | benzene | 0.012 | 0.0005 |
| Example 2 | 1250 | 50 | 22 | benzene | 0.012 | 0.0005 |
| Example 3 | 1250 | 36 | 16 | benzene | 0.012 | 0.0005 |
| Example 4 | 1250 | 18 | 8 | benzene | 0.012 | 0.0005 |
| Example 5 | 1200 | 75 | 33 | benzene | 0.012 | 0.0005 |
| Example 6 | 1250 | 50 | 22 | benzene | 0.12 | 0.005 |
| Example 7 | 1250 | 50 | 22 | toluene | 0.10 | 0.005 |
| Example 8 | 1250 | 50 | 22 | tetrahydrofuran | 0.13 | 0.005 |
| Example 9 | 1250 | 50 | 22 | benzene | 0.012 | 0.0005 |
| Example 10 | 1250 | 50 | 22 | benzene | 0.012 | 0.0005 |
| Example 11 | 1250 | 50 | 22 | benzene | 0.012 | 0.0005 |
| Comparative Example 1 | 1250 | 0 | – | benzene | 1.3 | 0.0005 |
| Comparative Example 2 | 1250 | 0 | – | benzene | 1.3 | 0.020 |
| Comparative Example 3 | 1250 | 9 | 4 | benzene | 0.012 | 0.0005 |
| Comparative Example 4 | 1000 | 50 | 22 | benzene | 0.012 | 0.0005 |
| Comparative Example 5 | 1000 | 100 | 45 | benzene | 0.012 | 0.0005 |

EP 1 791 991 B1

Table 1 (continued)

| | sulfur compound | | Carbon Recovery Percentage | Fiber Length | Shape of Produced Carbon Solid Content |
|---|---|---|---|---|---|
| | compound | Amount Introduced (mmol/min) | | | |
| Example 1 | Thiophene | 0.0002 | 42% | 20 μm | Fibrous material with fiber diameter of about 200 nm |
| Example 2 | Thiophene | 0.0007 | 53% | 15 μm | Fibrous material with fiber diameter of about 170 nm |
| Example 3 | Thiophene | 0.0007 | 34% | - | Fibrous material with fiber diameter of about 170 nm |
| Example 4 | Thiophene | 0.0007 | 15% | - | Fibrous material with fiber diameter of about 150 nm |
| Example 5 | Thiophene | 0.0002 | 45% | - | Fibrous material with fiber diameter of about 250 nm |
| Example 6 | Thiophene | 0.007 | 55% | - | Fibrous material with fiber diameter of about 200 nm |
| Example 7 | Thiophene | 0.007 | 56% | - | Fibrous material with fiber diameter of about 200 nm |
| Example 8 | Thiophene | 0.007 | 51% | - | Fibrous material with fiber diameter of about 200 nm |
| Example 9 | Dimethyl Sulfide | 0.0007 | 55% | 32 μm | Fibrous material with fiber diameter of about 250 nm |
| Example 10 | Dimethyl Disulfide | 0.0007 | 51% | 18 μm | Fibrous material with fiber diameter of about 200 nm |
| Example 11 | Carbon Disulfide | 0.0007 | 54% | - | Fibrous material with fiber diameter of about 250 nm |
| Comparative Example 1 | Thiophene | 0.0007 | 30% | - | Spherical material |
| Comparative Example 2 | Thiophene | 0.016 | 39% | 7 μm | Fibrous material with fiber diameter of about 100 nm |
| Comparative Example 3 | Thiophene | 0.0007 | 0% | - | (not produced) |
| Comparative Example 4 | Thiophene | 0.0007 | 0% | - | (not produced) |
| Comparative Example 5 | Thiophene | 0.0007 | 0% | - | (black sticky material) |

Table 2: Condition of Test

| | Ratio of Total Amount of Carbon Atoms Contained in Carbon Sources other than Methan to Total Amount of Carbon Atoms Contained in Methane (%) |
|---|---|
| Example 1 | 0.35 |
| Example 2 | 0.36 |
| Example 3 | 0.50 |
| Example 4 | 1.00 |
| Example 5 | 0.24 |
| Example 6 | 3.63 |
| Example 7 | 3.54 |
| Example 8 | 2.72 |
| Example 9 | 0.36 |
| Example 10 | 0.36 |
| Example 11 | 0.35 |
| Comparative Example 1 | ∞ |
| Comparative Example 2 | ∞ |
| Comparative Example 3 | 2.00 |
| Comparative Example 4 | 0.36 |
| Comparative Example 5 | 0.18 |

**Claims**

1. A process for producing a vapor-grown carbon fiber by contacting a carbon source in the supplied raw material with a catalyst and/or a catalyst precursor compound in a heating zone to produce a carbon fiber in a vapor phase, wherein the main carbon source is methane, the main carbon source meaning a carbon source having the largest number of carbons when the total amount of carbons in each carbon source contained in the supplied raw material is compared, the concentration of methane in the supplied raw material is at or more than 15 mol% to less than 100 mol%, the temperature in the high-temperature part of the heating zone is from 1,100 to 1,500°C, the temperature at the raw material-introducing part of the heating zone is 700°C or less, the carbon source is introduced together with the catalyst and/or catalyst precursor compound from outside into a reaction furnace, the supplied raw material resides in the low temperature part of the heating zone which is at a temperature of 600 to 1,000°C for 0.05 seconds or more before arriving at the high-temperature part of the heating zone and a carrier gas does not contain an oxygen molecule.

2. The process for producing a vapor-grown carbon fiber according to claim 1, wherein the residence time at a temperature of 1,100°C or more in the heating zone is 0.001 second or more.

3. The process for producing a vapor-grown carbon fiber according to claim 1, wherein the total amount of carbon atoms contained in the carbon source other than methane is 60% or less of the amount of carbon atoms contained in methane.

4. The process for producing a vapor-grown carbon fiber according to claim 3, wherein the total amount of carbon atoms contained in the carbon source other than methane is 10% or less of the amount of carbon atoms contained in methane.

5. The process for producing a vapor-grown carbon fiber according to claim 1, wherein the ratio of the atomic number of a catalyst element and the number of carbon atoms in the carbon source is

```
(atomic number of a catalyst element)/
(number of carbon atoms)= 0.000005 to 0.0015.
```

(number of carbon atoms)= 0.000005 to 0.0015.

6. The process for producing a vapor-grown carbon fiber according to claim 1, wherein the catalyst precursor compound is introduced into the heating zone after dissolving it in a compound which is in a liquid state at an ordinary temperature and pressure.

7. The process for producing a vapor-grown carbon fiber according to claim 1, wherein the catalyst precursor compound is introduced into the heating zone after dissolving it in a compound which is in a liquid state at an ordinary temperature and pressure, and entirely vaporizing the resulted solution.

8. The process for producing a vapor-grown carbon fiber according to claim 1, wherein the catalyst precursor compound is introduced into the heating zone after dissolving it in a compound which is in a liquid state at an ordinary temperature and pressure, entirely vaporizing the resulted solution, and mixing thus obtained gas with a methane-containing gas.

9. The process for producing a vapor-grown carbon fiber according to claim 8, wherein the compound which is in a liquid state at an ordinary temperature and pressure is a carbon source.

10. The process for producing a vapor-grown carbon fiber according to claim 6, wherein the solubility of the catalyst precursor compound at 25°C in the compound which is in a liquid state at an ordinary temperature and pressure is 10 g or more per 100 g of the compound which is in a liquid state at an ordinary temperature and pressure.

11. The process for producing a vapor-grown carbon fiber according to claim 8, wherein the compound which is in a liquid state at an ordinary temperature and pressure is at least one compound selected from the group consisting of benzene, toluene and tetrahydrofuran.

12. The process for producing a vapor-grown carbon fiber according to claim 1, wherein the catalyst and/or catalyst precursor compound is at least one metal selected from Groups 3, 5, 6, 8, 9 and 10 of the 18 Groups-Type Periodic Table of Elements and/or a compound comprising the at least one metal.

13. The process for producing a vapor-grown carbon fiber according to claim 1, wherein the all or a part of the gas after reaction is circulated and reused.

14. The process for producing a vapor-grown carbon fiber according to claim 1, wherein a carbon fiber having an average fiber diameter of 10 nm or more is produced.

**Patentansprüche**

1. Verfahren zum Herstellen von in der Dampfphase gewachsenen Kohlenstofffasern durch Kontaktieren einer Kohlenstoffquelle in dem zugeführten Ausgangsmaterial mit einem Katalysator und/oder einer Katalysatorvorläuferverbindung in einer Heizzone zur Erzeugung von Kohlenstofffasern in einer Dampfphase, wobei die Hauptkohlenstoffquelle Methan ist, wobei Hauptkohlenstoffquelle eine Kohlenstoffquelle mit der höchsten Anzahl an Kohlenstoffen bedeutet, wenn die Gesamtmenge der Kohlenstoffe in jeder in dem zugeführten Ausgangsmaterial enthaltenen Kohlenstoffquelle verglichen wird, wobei die Konzentration von Methan in dem zugeführten Ausgangsmaterial mindestens 15 Mol-% bis weniger als 100 Mol-% ist, die Temperatur in dem Hochtemperaturteil der Heizzone 1100 bis 1500 °C ist, die Temperatur an dem Ausgangsmaterialeinführungsteil der Heizzone 700°C oder weniger ist, die Kohlenstoffquelle zusammen mit dem Katalysator und/oder der Katalysatorvorläuferverbindung von außen in den Reaktionsofen eingeführt wird, das zugeführte Ausgangsmaterial sich vor Ankunft an dem Hochtemperaturteil der Heizzone 0,05 Sekunden oder länger in dem Niedertemperaturteil der Heizzone befindet, der eine Temperatur von 600 bis 1000 °C hat, und ein Trägergas ein Sauerstoffmolekül nicht enthält.

2. Verfahren zum Herstellen von in der Dampfphase gewachsenen Kohlenstofffasern nach Anspruch 1, wobei die Verweildauer bei einer Temperatur von 1100 °C oder höher in der Heizzone 0,001 Sekunden oder länger ist.

3. Verfahren zum Herstellen von in der Dampfphase gewachsenen Kohlenstofffasern nach Anspruch 1, wobei die Gesamtmenge von in der Kohlenstoffquelle enthaltenen anderen Kohlenstoffatomen als Methan 60 % oder weniger der in Methan enthaltenen Kohlenstoffatome ist.

4. Verfahren zum Herstellen von in der Dampfphase gewachsenen Kohlenstofffasern nach Anspruch 3, wobei die Gesamtmenge von in der Kohlenstoffquelle enthaltenen anderen Kohlenstoffatomen als Methan 10 % oder weniger der Menge der in dem Methan enthaltenen Kohlenstoffatome ist.

5. Verfahren zum Herstellen von in der Dampfphase gewachsenen Kohlenstofffasern nach Anspruch 1, wobei das Verhältnis der Atomzahl eines Katalysatorelements zu der Zahl der Kohlenstoffatome in der Kohlenstoffquelle folgendes ist: (Atomzahl des Katalysätorelements)/(Anzahl der Kohlenstoffatome) = 0,000005 bis 0,0015.

6. Verfahren zum Herstellen von in der Dampfphase gewachsenen Kohlenstofffasern nach Anspruch 1, wobei die Katalysatorvorläuferverbindung in die Heizzone eingeführt wird, nachdem sie in einer Verbindung aufgelöst worden ist, die bei Normaltemperatur und Normaldruck in einem flüssigen Zustand ist.

7. Verfahren zum Herstellen von in der Dampfphase gewachsenen Kohlenstofffasern nach Anspruch 1, wobei die Katalysatorvorläuferverbindung in die Heizzone eingeführt wird, nachdem sie in einer Verbindung, die bei Normaltemperatur und Normaldruck in einem flüssigen Zustand ist, aufgelöst worden ist und die erhaltene Lösung vollständig verdampft worden ist.

8. Verfahren zum Herstellen von in der Dampfphase gewachsenen Kohlenstofffasern nach Anspruch 1, wobei die Katalysatorvorläuferverbindung in die Heizzone eingeführt wird, nachdem sie in einer Verbindung, die bei Normaltemperatur und Normaldruck in einem flüssigen Zustand ist, aufgelöst worden ist, die erhaltene Lösung vollständig verdampft worden ist und das so erhaltene Gas mit einem Methan enthaltenden Gas gemischt worden ist.

9. Verfahren zum Herstellen von in der Dampfphase gewachsenen Kohlenstofffasern nach Anspruch 8, wobei die Verbindung, die bei Normaltemperatur und Normaldruck in einem flüssigen Zustand ist, eine Kohlenstoffquelle ist.

10. Verfahren zum Herstellen von in der Dampfphase gewachsenen Kohlenstofffaser nach Anspruch 6, wobei die Löslichkeit der Katalysatorvorläuferverbindung bei 25 °C in der Verbindung, die bei Normaltemperatur und Normaldruck in einem flüssigen Zustand ist, 10 g oder mehr pro 100 g der Verbindung ist, die bei Normaltemperatur und Normaldruck in einem flüssigen Zustand ist.

11. Verfahren zum Herstellen von in der Dampfphase gewachsenen Kohlenstofffasern nach Anspruch 8, wobei die Verbindung, die bei Normaltemperatur und Normaldruck in einem flüssigen Zustand ist, mindestens eine Verbindung ist, die aus der aus Benzol, Toluol und Tetrahydrofuran bestehenden Gruppe ausgewählt ist.

12. Verfahren zum Herstellen von in der Dampfphase gewachsenen Kohlenstofffasern nach Anspruch 1, wobei der Katalysator und/oder die Katalysatorvorläuferverbindung mindestens ein Metall, ausgewählt aus den Gruppen 3, 5, 6, 8, 9 und 10 des aus 18 Gruppen bestehenden Periodensystems der Elemente, und/oder eine Verbindung ist, die mindestens ein Metall enthält.

13. Verfahren zum Herstellen von in der Dampfphase gewachsenen Kohlenstofffasern nach Anspruch 1, wobei das Gas nach der Reaktion ganz oder teilweise zirkuliert und wiederverwendet wird.

14. Verfahren zum Herstellen von in der Dampfphase gewachsenen Kohlenstofffasern nach Anspruch 1, wobei Kohlenstofffasern mit einem mittleren Faserdurchmesser von 10 nm oder mehr hergestellt werden.

**Revendications**

1. Procédé de production d'une fibre de carbone étirée à la vapeur grâce à la mise en contact d'une source de carbone dans la matière première fournie avec un catalyseur et/ou un composé de précurseur de catalyseur dans une zone chauffante pour produire une fibre de carbone dans une phase vapeur, dans lequel la source principale de carbone est du méthane, la source principale de carbone signifiant une source de carbone ayant le plus grand nombre d'atomes de carbone lorsque la quantité totale d'atomes de carbone dans chaque source de carbone contenue dans la matière première fournie est comparée, la concentration du méthane dans la matière première fournie est égale ou supérieure à 15 % en mole ou inférieure à 100 % en mole, la température dans la partie de haute température de la zone chauffante est comprise entre 1 100 et 1 500 °C, la température au niveau de la partie d'introduction de la matière première de la zone chauffante est égale à 700 °C, ou moins, la source de carbone est introduite en même temps que le catalyseur et/ou le composé précurseur de catalyseur à partir de l'extérieur dans un four de réaction, la matière première fournie réside dans la partie à faible température de la zone chauffante qui est à une température comprise entre 600 et 1 000 °C pendant 0,05 seconde ou plus avant d'arriver à la partie à haute température de la zone chauffante et un gaz porteur ne contient pas de molécules d'oxygène.

2. Procédé de production d'une fibre de carbone étirée à la vapeur selon la revendication 1, dans lequel le temps de séjour à une température de 1 100 °C ou plus dans la zone chauffante est égal à 0,001 seconde ou plus.

3. Procédé de production d'une fibre de carbone étirée à la vapeur selon la revendication 1, dans lequel la quantité totale d'atomes de carbone contenus dans la source de carbone autre que le méthane est égale à 60 % ou moins de la quantité d'atomes de carbone contenus dans le méthane.

4. Procédé de production d'une fibre de carbone étirée à la vapeur selon la revendication 3, dans lequel la quantité totale d'atomes de carbone contenus dans la source de carbone autre que le méthane est égale à 10 % ou moins de la quantité d'atomes de carbone contenus dans le méthane.

5. Procédé de production d'une fibre de carbone étirée à la vapeur selon la revendication 1, dans lequel le rapport du nombre atomique d'un élément catalyseur et du nombre d'atomes de carbone dans la source de carbone est

```
(nombre atomique d'un élément catalyseur)/(nombre d'atomes
de carbone) = 0,000005 à 0,0015.
```

6. Procédé de production d'une fibre de carbone étirée à la vapeur selon la revendication 1, dans lequel le composé précurseur de catalyseur est introduit dans la zone chauffante après dissolution dans un composé qui est dans un état liquide à une température et sous une pression ordinaires.

7. Procédé de production d'une fibre de carbone étirée à la vapeur selon la revendication 1, dans lequel le composé précurseur de catalyseur est introduit dans la zone chauffante après-dissolution dans un composé qui est dans un état liquide à une température et sous une pression ordinaires, et une vaporisation intégrale de la solution résultante.

8. Procédé de production d'une fibre de carbone étirée à la vapeur selon la revendication 1, dans lequel le composé précurseur de catalyseur est introduit dans la zone chauffante après.dissolution dans un composé qui est dans un état liquide à une température et sous une pression ordinaires, vaporisation intégrale de la solution résultante et mélange du gaz ainsi obtenu avec du gaz contenant du méthane.

9. Procédé de production d'une fibre de carbone étirée à la vapeur selon la revendication 8, dans lequel le composé qui est dans un état liquide à une température et sous une pression ordinaires est une source de carbone.

10. Procédé de production d'une fibre de carbone étirée à la vapeur selon la revendication 6, dans lequel la solubilité du composé précurseur de catalyseur à 25 °C dans le composé qui est à l'état liquide à une température et sous une pression ordinaires est de 10 g ou plus pour 100 g de composé qui est à l'état liquide à une température et sous une pression ordinaires.

11. Procédé de production d'une fibre de carbone étirée à la vapeur selon la revendication 8, dans lequel le composé qui est à l'état liquide à une température et sous une pression ordinaires est au moins un composé choisi parmi le groupe consistant en le benzène, le toluène et le tétrahydrofurane.

12. Procédé de production d'une fibre de carbone étirée à la vapeur selon la revendication 1, dans lequel le catalyseur et/ou le composé précurseur de catalyseur est au moins un métal choisi parmi les groupes 3, 5, 6, 8, 9 et 10 des 18 groupes types du tableau périodique des éléments et/ou un composé comprenant le au moins un métal.

13. Procédé de production d'une fibre de carbone étirée à la vapeur selon la revendication 1, dans lequel l'intégralité ou une partie du gaz après la réaction est remise en circulation et réutilisée.

14. Procédé de production d'une fibre de carbone étirée à la vapeur selon la revendication 1, dans lequel une fibre de carbone ayant un diamètre de fibre moyen de 10 nm ou plus est produite.

EP 1 791 991 B1

# Fig.1

# Fig.2

LIQUID RAW MATERIAL

GAS RAW MATERIAL

CARRIER GAS

4

1

2

2

3

EXHAUST GAS

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62049363 A
- JP 1092423 A
- US 2796331 A
- US 4770867 A
- WO 03097910 A
- US 5846509 A
- US 5374415 A

**Non-patent literature cited in the description**

- *J. Phys. Chem. B,* 1999, vol. 103, 6484-6492
- influence des conditions operatoires sur la croissance catalytique des fibres de carbone vapodeposees a partir du methane. **BENISSAD-AISSANI, F. et al.** Carbon. Elsevier, January 1993, vol. 31, 21-27